# EUROPEAN PATENT SPECIFICATION

(11) **EP 2 542 619 B1**
(45) Date of publication and mention of the grant of the patent: **16.07.2014**
(21) Application number: 11751043.8
(22) Date of filing: 01.02.2011
(51) Int. Cl.: C08L 23/00, C08L 23/10, C08L 23/16

(54) **REACTOR THERMOPLASTIC POLYOLEFIN ELASTOMER COMPOSITION**
THERMOPLASTISCHE REAKTOR-POLYOLEFINELASTOMERZUSAMMENSETZUNG
COMPOSITION ÉLASTOMÈRE THERMOPLASTIQUE À BASE DE POLYOLÉFINES POUR RÉACTEUR

(30) Priority: 02.03.2010 US 716036
(43) Date of publication of application: 09.01.2013
(73) Proprietor: Sumitomo Chemical Company, Limited, Tokyo 104-8260 (JP)
(72) Inventor: BOKHARI, Nadeem, Akhtar, Troy MI 48085 (US); OHTANI, Kousuke, Ichihara-shi Chiba Pref. 299-0125 (JP); IJICHI, Yasuhito, Sodegaura-shi Chiba Pref. 299-0246 (JP)
(74) Representative: Vossius & Partner
(86) International application number: PCT/US2011/023268
(87) International publication number: WO 2011/109134

(56) References cited:
- US-A1- 2001 018 475
- US-A1- 2005 101 738
- US-A1- 2005 209 403
- US-A1- 2008 233 376
- US-B1- 6 372 847

## Description

### REFERENCE TO EARLIER FILED APPLICATION

This application claims the benefit of the filing date of United States Patent Application Number 12/716,036, filed March 2,2010, the disclosure of which is incorporated, in its entirety, by this reference.

### BACKGROUND OF THE INVENTION

### 1. Field of the Invention

The present invention relates to a thermoplastic elastomer composition.

### 2. Description of the Related Art

Air bag covers of automobile air bag systems require stiffness suited for each application, such as for a driver's seat and passenger's seat; high tensile breaking elongation so as not to cause cleavage of air bag covers at the portion other than a tear line; a thin-wall portion formed so as to cause cleavage of the air bag cover upon expansion of the air bag; low-temperature impact strength so as to withstand use in cold climates, and also appearance suited for automobile interior components.

Injection-molded articles of the above polyolefinic thermoplastic elastomer composition have not, however, been satisfactory especially with its processing in that it often takes a long time to remove the molded article from the mold and the removed molded article is often deformed.

### SUMMARY OF THE INVENTION

An object of the present invention is to previde a polyolefinic thermoplastic elastomer composition suitable for the production of an injection molded article, which can be readily removed from the mold.

In one aspect, there is a thermoplastic elastomer composition which includes about 100 parts by weight of component (A), about 20 to about 100 parts by weight of component (B), and about 5 to about 50 parts by weight of component (C) per 100 parts by weight of component (A).

Component (A) is a polypropylene resin which includes about 60 to about 90% by weight of component (i) and about 40 to about 10% by weight of component (ii).

Component (i) is selected from a propylene homopolymer, a copolymer of propylene and at least one monomer selected from the monomer group consisting of ethylene and an α-olefin having 4 or more carbon atoms, the copolymer of propylene comprising about 90% by weight or more of propylene units, and a mixture thereof.

Component (ii) is an ethylene-α-olefin copolymer which includes about 20 to about 50% by weight of ethylene units, and about 80 to about 50% by weight of α-olefin having 3 or more carbon atoms.

Component (B) is an ethylene-α-olefin elastomer which includes about 60 to about 85% by weight of ethylene units, and about 40 to about 15% by weight of α-olefin units.

In some embodiments, component (A) has a melting temperature as measured by a differential scanning calorimeter of 155°C or higher

Component (B) has a Mooney stress relaxation area of from about 180 to about 300.

In some embodiments, the total amount of component (i) and component (ii) is 100% by weight of component (A).

In some embodiments, the total content of ethylene units and α-olefin is 100% by weight of component (ii).

In some embodiments, the total content of ethylene units and α-olefin is 100% by weight of component (B).

Component (C) includes a polyethylene resin having a density of about 915 Kg/m³ or more and a melt flow rate of about 0.1 to about 10 g/10 min. Component (C) is about 5 to about 50 parts by weight of component (C) per 100 parts by weight of component (A).

In one aspect, a polyolefinic thermoplastic elastomer composition is disclosed that enables production of a molded article with improved removability properties.

In some embodiments, the thermoplastic composition also includes component (D). Componcnt (D) is at least one compound selected from the group consisting of fatty acids having 5 or more carbon atoms, metal salts of fatty acids having 5 or more carbon atoms, fatty acid amides having 5 or more carbon atoms, and esters of fatty acids having 5 or more carbon atoms.

In some embodiments, component (A) of the thermoplastic elastomer composition has a ratio of intrinsic viscosity (([ηcxs]/[ηcxis]) 135°C, tetralin) from 1.3 to 8.

### DETAILED DESCRIPTION OF THE PREFERRED EMBODIMENTS

A monomer unit(s) (e.g. ethylene units, propylene units, and higher α-olefin units) in this specification means a structural unit(s) that is derived from the monomer and constituting a polymer chain.

Component (A) is a polypropylene polymer containing components (i) and (ii). Component (i) is selected from a propylene homopolymer, a copolymer of propylene and at least one monomer selected from the monomer group consisting of ethylene and an α-olefin having 4 or more carbon atoms, the copolymer containing 90% by weight or more of propylene units, or a mixture thereof.

Component (ii) is an ethylene-α-olefin copolymer comprising about 20 to about 50% by weight of ethylene units, and about 80 to about 50% by weight α-olefin having 3 or more carbon atoms, the total content of the ethylene units and α-olefin is 100% by weight of component (ii).

The copolymer in component (i) is a copolymer of propylene and at least one monomer selected from the monomer group consisting of ethylene and an α-olefin having 4 or more carbon atoms. Examples of the α-olefin having 4 or more carbon atoms include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicocene, 3-methyl-1-butene, 3-methyl-1-pentene, 4-methyl-1-pentene, 2-ethyl-3-hexene, and 2,2,4-trimethyl-1-pentene. In some embodiments, an α-olelin having 4 to 10 carbon atoms may be used. In some embodiments, 1-butene may be used. In some embodiments, 1-hexene may be used. In some embodiments, 1-octene may be used. The α-olefin having 4 to 10 carbon atoms may be used alone or in a combination of two or more of them.

Examples of component (i) include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, a propylene-ethylene-1-octene copolymer, and mixtures thereof. In some embodiments, a propylene homopolymer, a copolymer of propylene, and at least one monomer selected from the monomer group consisting of ethylene and an α-olefin having 3 to 10 carbon atoms, and a mixture thereof may be used.

The content of the propylene-based monomer units (propylene units) in the copolymer of component (i) may be 90% by weight or more per 100% by weight of the copolymer. In some embodiments, the content of the propylene-based monomer units in the copolymer of component (i) is 95% by weight or more. In some embodiments, the content is 98% by weight or more. It has been observed that with increasing concentration of propylene units, molded articles have improved heat resistance and stiffness.

The contents of the ethylene-based monomer units (ethylene units) and the α-olefin-based monomer units having 4 or more carbon atoms (α-olefin units having 4 or more carbon atoms) are 10% by weight or less per 100% by weight of the copolymer. In some embodiments, the content of the ethylene-based monomer units in the copolymer of component (i) is 5% by weight or less. In some embodiments, the content is 2% by weight or less. It has been observed that with a decreasing concentration of ethylene units, molded articles have improved heat resistance and stiffness.

The contents (the quantitative amounts) of the propylene units, the ethylene units and the α-olefin units having 4 or more carbon atoms in component (i) can be determined by infrared spectroscopy.

The ethylene-α-olefin copolymer of component (ii) is a copolymer having ethylene units and α-olefin-based monomer units (α-olefin units). Examples of the α-olefin include: propylene, 1-butene, 2-methylpropylene, 1-pentene, 3-methyl-1-butene, 1-hexene, 4-methyl-1-pentene and 1-octene. In some embodiments, an α-olefin having 3 to 10 carbon atoms may be used. In some embodiments, propylene may be used. In some embodiments, 1-butene may be used. In some embodiments, 1-hexene may be used. In some embodiments, 1-octene may be used. The α-olefin may be used alone or in a combination of two or more of them.

Examples of the ethylene-α-olefin copolymer of component (ii) include an ethylene-propylene copolymer, an ethylene-1-butene copolymer, an ethylene-1-hexene copolymer, an ethylene-1-octene copolymer, an ethylene-propylene-1-butene copolymer, an ethylene-propylene-1-hexene copolymer, and an ethylene-propylene-1-octene copolymer. The copolymer may be used alone or in a combination of two or more of them. In some embodiments, a copolymer of an α-olefin having 3 to 10 carbon atoms may be used.

The content of the ethylene units in the ethylene-α-olefin copolymer of component (ii) is 20% by weight or more per 100% by weight of the copolymer. In some embodiments, the content is 25% by weight or more. In some embodiments, the content is 30% by weight or more. It has been observed that with an increasing proportion of ethylene units above 25% but less than 45%, molded articles have increased low-temperature impact strength. The content of the ethylene units in component (ii) is 50% by weight or less. In some embodiments, the content may be 48% by weight or less. In some embodiments, the content may be 45% by weight or less. It has been observed that with a decreasing proportion of ethylene units in component (ii) less than 50% but greater than 30%, molded articles have increased low-temperature impact strength.

The content of the α-olefin units in the ethylene-α-olefin copolymer of component (ii) is 80% by weight or less. In some embodiments, the content may be 75% by weight or less. In some embodiments, the content may be 70% by weight or less. It has been observed that with a decreasing proportion of α-olefin units less than 80% but more than 55%, molded articles have increased low-temperature impact strength. The content of the α-olefin units in component (ii) is 50% by weight or more. In some embodiments, the content may be 52% by weight or more. In some embodiments, the content may be 55% by weight or more. It has been observed that with increasing α-olefin units in component (ii) greater than 50% but less than 70%, molded articles have increased low-temperature impact strength.

The contents (quantitative amounts) of the ethylene units and the α-olefin units in component (ii) can be determined by infrared spectroscopy.

The content of component (i) in component (A) is from about 60 to about 90% by weight, and the content of component (ii) is from 40 to 10% by weight. In some embodiments, the content of component (i) may be from 65 to 85% by weight and the content of the component (ii) may be from 35 to 15% by weight In some embodiments, the content of component (i) is from 70 to 80% by weight of component (A), and the content of component (ii) is from 30 to 20% by weight of component (A). In these particular embodiments, the total content of components (i) and (ii) is 100% by weight of component (A).

Component (A) may be a polymer having a ratio of intrinsic viscosity (([ηcxs]/[ηcxis]) 135°C, tetralin) of a component soluble in xylene at 20°C [ηcxs] to intrinsic viscosity (135°C, tetralin) of a component insoluble in xylene at 20°C ranging from 1.3 to 8. In some embodiments, component (A) may be a polymer having a ratio of intrinsic viscosity ranging from 1.5 to 7. It has been observed that the narrower 1.5 to 7 range of polymer ratio of intrinsic viscosity results in a molded article with improved removability properties.

The intrinsic viscosity is determined by the following procedure. Reduced viscosity was measured in tetralin at 135°C using an ubbelohde-type viscometer and the intrinsic viscosity was calculated in accordance with the method described in "Polymer Solution, Polymer Experiments Vol. 11 (Kobunshi Yocki, Kobunshi Jikkengaku 11) page 491 (published by Kyoritsu Shuppan Co., Ltd. in 1982), that is, by an extrapolation method. The xylene soluble portion (CXS portion) at 20°C and the xylene insoluble portion (CXIS) at 20°C can be obtained by the following method. After completely dissolving about 5 g of component (A) in 500 ml of boiling xylene, the xylene solution is slowly cooled to room temperature and conditioning is carried out at 20°C for 4 or more hours, and then the precipitate and the solution are separated by filtration. The CXS portion can be obtained by removing the solvent from the solution and recovering the polymer dissolved in the solution.

In some embodiments, component (A) may have a melting temperature of 155°C or higher. In some embodiments, component (A) may have a melting temperature of 160°C or higher. It has been observed that with an increasing melting temperature of component (A), molded articles have improved removability. The melting temperature of component (A) may be 175°C or lower.

The melting temperature can be obtained from a differential scanning calorimeter. A differential scanning calorimetry curve is measured by the differential scanning calorimeter under the following conditions, and the melting temperature is determined from the differential scanning calorimetry curve by a heating operation.

### Measuring Conditions

Temperature falling operation: After melting at 220°C, temperature falling is carried out within a range from 220 to -90°C at a temperature falling rate of 5°C /min.

Temperature rising operation: Immediately after the temperature falling operation, temperature rising is carried out within a range from -90 to 200°C at a temperature rising rate of 5°C /min.

In some embodiments, component (A) may have a melt flow rate (temperature: 230°C, load: 21.18 N) of 5 g/10 min to 200 g/10 min. In some embodiments, component (A) may have a melt flow rate of 10 g/10 min to 150 g/10 min. It has been observed that with the narrower melt flow rate of 10 g/10 min to 150 g/10 min of component (A), molded articles have improved appearance and tensile breaking elongation. The melt flow rate is measured under the conditions of a temperature of 230°C and a load of 21.18 N in accordance with JIS K7210.

As a method for producing a polypropylene polymer of component (A), for example, a known polymerization method using a known catalyst for olefin polymerization is used. For example, a multistage polymerization method using a Ziegler-Natta catalyst can be used. As the multistage polymerization method, for example, a slurry polymerization method, a solution polymerization method, a bulk polymerization method, vapor phase polymerization method and the like can be used, and two or more kinds of these methods can be used in combination. Commercially available products can also be used.

The ethylene-α-olefin elastomer of the component (B) may be an ethylene-α-olefin copolymer, an ethylene-α-olefin-non-conjugated diene copolymer, or a mixture thereof. Examples of the α-olefin include propylene, 1-butene, 2-methylpmpylene, 1-pentene, 3-methyl-1-butene, 1-hexene, 4-methyl-1-pentene and 1-octene. In some embodiments, the α-olefin having 3 to 10 carbon atoms may be used. In some embodiments, propylene may be used. In some embodiments, 1-butene may be used. In some embodiments, 1-hexene may be used. In some embodiments, 1-octene may be used. The α-olefin may be used alone or in combination of two or more of them.

Examples of the non-conjugated diene include chain non-conjugated dienes such as 1,4-hexadiene, 1,6-octadiene, 2-methyl-1,5-hexadiene, 6-methyl-1,5-heptadiene, and 7-methyl-1,6-octadiene; cyclic non-conjugated dienes such as cyclohexadiene, dicyclopentadiene, methyltetrahydroindene, 5-vinylnorbomene, 5-ethylidene-2-norbornene, 5-methylene-2-norbornene, 5-isopropylidene-2-norbornene, and 6-chloromethyl-5-isopropenyl-2-norbornene. In some embodiments, 5-ethylidene-2-norbomene may be used. In some embodiments, dicyclopentadiene may be used.

Examples of the ethylene-α-olefin copolymer of component (B) include an ethylene-propylene copolymer, an ethylene-1-butene copolymer, an ethylene-1-hexene copolymer, an ethylene-1-octene copolymer, an ethylene-propylene-1-butene copolymer, an ethylene-propylene-1-hexene copolymer, and an ethylene-propylene-1-octene copolymer. Examples of the ethylene-α-olefin-non-conjugated diene copolymer include an ethylene-propylene-5-ethylidene-2-norbornene copolymer, an ethylene-propylene-dicyclopentadiene copolymer, an ethylene-propylene-1,4-hexadiene copolymer, and an ethylene-propylene-5-vinyl-2-norbornene copolymer. The copolymer may be used alone or in a combination of two or more of them.

The content of the ethylene units in the copolymer of component (B) is about 60% by weight or more. In some embodiments, the content is 65% by weight or more. It has been observed that with an increasing proportion of ethylene units above 60% but less than 80%, molded articles have improved mold releasability. In some embodiments, the content of the ethylene units of component (B) is about 85% by weight or less. In some embodiments, the content may be 80% by weight or less. It has been observed that with a decreasing proportion of ethylene units less than 85% but more than 65%, molded articles have increased low-temperature impact strength.

The content of the α-olefin units in the copolymer of component (B) is about 40% by weight or less. In some embodiments, the content may be 35% by weight or less. It has been observed that with a decreasing proportion of α-olefin units less than 40% but more than 20%, molded articles have improved mold releasability. In some embodiments, the content of the α-olefin units is 15% by weight or more. In some embodiments, the content may be 20% by weight or more. It has been observed that with an increasing proportion of α-olefin units greater than 15% but less than 35%, molded articles have increased low-temperature impact strength.

In some embodiments, the total of the content of the ethylene units and α-olefin units is 100% by weight of component (B).

The content (quantitative amounts) of the ethylene units and the content of the α-olefin units can be determined by infrared spectroscopy.

The content of the non-conjugated diene units in the ethylene-α-olefin non-conjugated diene copolymer of component (B) may be 10% by weight or less (per 100% by weight of the copolymer). In some embodiments, the content may be 5% by weight or less.

The content (quantitative amounts) of the non-conjugated diene units can be determined by infrared spectroscopy.

Component (B) may have a Mooney viscosity (ML1+4, 125°C) measured at 125°C of from 20 to 80. In some embodiments, component (B) may have a Mooney viscosity of from 25 to 75. It has been observed that with a narrower 25 to 75 range of Mooney viscosity, molded articles have improved mold releasability and low-temperature impact strength.

The Mooney viscosity is measured at a test temperature of 125°C and a rotor rotating time of 4 minutes in accordance with ASTM D-1646.

Component (B) has a Mooney stress relaxation area of from 180 to 300. In some embodiments, component (B) may have a Mooney stress relaxation area of from 200 to 290. It has been observed that with a narrower 200 to 290 range of Mooney stress relaxation area, molded articles have improved mold releasability and low-temperature impact strength.

The Mooney stress relaxation area is an area of a stress release curve at a release time of 1 to 100 seconds, which is calculated in accordance with ASTM D-1646 from a stress release curve obtained by a stress release test in accordance with ASTM D-1646.

Component (B) may be produced using a method of copolymerizing ethylene, α-olefin and non-conjugated diene using a complex catalyst such as a Ziegler-Natta catalyst, a metallocene complex or a non-metallocene complex. Component (B) may be produced using a method of copolymerizing ethylene and α-olefin using a polymerization catalyst used to produce a polymer having long-chain branches. Component (B) may be produce using a method of copolymerizing ethylene, α-olefin and a macromonomer or the like. A method for producing component (B) includes, for example, the method described in International Patent Publication WO01/85839.

It is considered that the Mooney stress relaxation area is an indicator showing the number of long-chain branches, the length of long-chain branches in a polymer, and the proportion of a polymer component in a polymer. The Mooney stress relaxation area is increased by increasing the copolymerization degree of conjugated diene, the molecular weight, or the like.

In one aspect, a thermoplastic elastomer composition contains component (A), component (B) and component (C). The content of component (B) is 20 parts by weight or more (per 100 parts by weight of the component (A)). In some embodiments, the content of component (B) may be 25 parts by weight or more. The content of component (B) is 100 parts by weight or less. In some embodiments, the content of component (B) may be 90 parts by weight or less. In some embodiments, the content of component (B) may be 80 parts by weight or less.

The thermoplastic elastomer composition further contains component (C). In some embodiments, the presence of component (C) may improve a molded article's mold releasability. Component (C) is a polyethylene polymer having a density of 915 kg/m³ or more and a melt flow rate of 0.1 to 10 g/min.

Examples of the polyethylene polymer of component (C) include an ethylene homopolymer, and a copolymer of ethylene and α-olefin having 3 or more carbon atoms. Examples of the α-olefin having 3 or more carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicocene, 3-methyl-1-butene, 3-methyl-1-pentene, 4-methyl-1-pentene, 2-ethyl-1-hexene, and 2,2,4-trimethyl-1-pentene. In some embodiments, an α-olefin having 4 to 10 carbon atoms may be used. In some embodiments, 1-hexene may be used. In some embodiments, 1-octene may be used. The α-olefin may be used alone or in combination of two or more of them.

Examples of the copolymer of ethylene and α-olefin having 3 or more carbon atoms of component (C) include an ethylene-propylene copolymer, an ethylene-1-butene copolymer, an ethylene-1-hexene copolymer, an ethylene-1-octene copolymer, an ethylene-1-butene-1-hexene copolymer, and an ethylene-1-butene-1-octene copolymer. The copolymer may be used alone or in combination of two or more of them.

The content of the ethylene units of the copolymer of component (C) may be 85% by weight or more (per 100% by weight of the component (C)). In some embodiments, the content may be 87% by weight or more.

The content (quantitative amounts) of the ethylene units in component (C) can be determined by infrared spectroscopy.

The copolymer of component (C) has a density of 915 kg/m³ or more. It has been observed that with an increasing density of the copolymer of component (C) more than 910 kg/m³ but less than 930 kg/m³, molded articles have improved mold releasability. In some embodiments, the copolymer of component (C) may have a density of 965 kg/m³ or less. In some embodiments, the copolymer may have a density of 950 kg/m³ or less. In some embodiments, the copolymer may have a density of 940 kg/m³ or less. In some embodiments, the copolymer may have a density of 930 kg/m³ or less. It has been observed that with a decreasing density of the copolymer of component (C) less than 965 kg/m³ but more than 915 kg/m³, molded articles have increased low-temperature impact strength.

The density is measured in accordance with JIS K7112 using a test piece subjected to an annealing treatment described in JISK6760: 1995.

Component (C) has a melt flow rate (temperature: 190°C, load: 21.18 N) of 0.1 g/10 min to 100 g/10 min. In some embodiments, component (C) may have a melt flow rate of 0.8 g/10 min to 5 g/10 min. It has been observed that with a narrower 0.8 g/10 min to 5 g/10 min range of melt flow rate of component (C), molded articles have increased mold releasability and low-temperature impact strength.

The melt flow rate is measured under the conditions of a temperature of 190°C and a load of 21.18 N in accordance with JIS K7210

As a method for producing a polyethylene polymer of component (C), a known polymerization method using a known catalyst for olefin polymerization is used For example, a complex catalyst such as a Ziegler-Natta catalyst, a metallocene complex or a non-metallocene complex is used.

The content of component (C) is from 5 to 50 parts by weight (per 100 parts by weight of the component (A)). In some embodiments, the content of component (C) may be from 10 to 30 parts by weight.

In one aspect, a thermoplastic elastomer composition may contain component (D). In some embodiments, component D may improve mold releasability of the molding upon injection molding and surface feeling of the molding.

Component (D) may be at least one compound selected from the compound group consisting of fatty acids having 5 or more carbon atoms, metal salts of fatty acid having 5 or more carbon atoms, fatty acid amides having 5 or more carbon atoms, and esters of fatty acid having 5 or more carbon atoms.

Examples of the fatty acids having 5 or more carbon atoms as component (D) include lauric acid, palmitic acid, stearic acid, behenic acid, oleic acid, erucic acid, linoleic acid, and ricinoleic acid

Examples of the metal salts of fatty acid having 5 or more carbon atoms of component (D) include salts of the above fatty acids and metals such as Li, Na, Mg, Al, K, Ca, Zn, Ba, and Pb, and specific examples thereof include lithium stearate, sodium stearate, calcium stearate, and zinc stearate.

Examples of the fatty acid amides having 5 or more carbon atoms of component (D) include lauric acid amide, palmitic acid amide, stearic acid amide, oleic acid amide, erucic acid amide, methylenebisstearic acid amide, ethylenebisstearic acid amide, ethylenebisoleic acid amide, and stearyl dimethanol amide. In some embodiments, component (D) is erucic acid amide.

Examples of the esters of the fatty acid having 5 or more carbon atoms of component (D) include esters of the fatty acids as above and alcohols such as ahphatic alcohols (myristyl alcohol, palmityl alcohol, stearyl alcohol, behenyl alcohol, 12-hydroxystearyl alcohol, etc.), aromatic alcohols (benzyl alcohol, β-phenylethyl alcohol, phthalyl alcohol, etc.), polyhydric alcohols (glycerin, diglycerin, polyglycerin, sorbitan, sorbitol, propylene glycol, polypropylene glycol, polyethylene glycol, pentacrythritol, trimethylolpropane, etc.), and specific examples thereof include glycerin monooleate, glycerin dioleate, polyethylene glycol monostearate, and citric acid distearate In some embodiments when component (D) is present, it is present from 0.01 to 1.5 parts by weight (per 100 parts by weight of the total amount of the components (A), (B) and (C)) In some embodiments when component (D) is present, it is present from 0.01 to 1.5 parts by weight (per 100 parts by weight of the total amount of the components (A) and (B) In some embodiments, component (D) is present 0.05 to 1 part by weight.

In one aspect, a thermoplastic elastomer composition can contain one or more of inorganic fillers (talc, calcium carbonate, fired kaolin, etc.), organic fillers (fiber, wood flour, cellulose powder, etc.), lubricants (silicone oil, silicone gum, etc.), antioxidants (phenol, sulfur-, phosphorus- lactone- and vitamin-based antioxidants), weathering stabilizers, ultraviolet absorbers (benzotriazole-, triazine-, anilide- and benzophenone-based ultraviolet absorbers), heat stabilizers, light stabilizers (hindered amine- and benzoate-based light stabilizers), pigments, nucleating agents, adsorbents (metal oxide, zinc oxide, magnesium oxide, etc.), metal chloride (iron chloride, calcium chloride, etc.), neutralizing agents for neutralizing residual catalysts in ingredient polymers such as hydrotalcite, aluminate, etc.). These optional ingredients may be included as long as they do not interfere with providing a molded article with improved removability properties.

In one aspect, the thermoplastic elastomer composition can be obtained by melt-kneading the components (A), (B) and (C) and, if necessary, other components such as component (D) using a known method, for example, a method using a twin-screw extruder, a Bunbary mixer or the like.

In one aspect, the thermoplastic elastomer composition can be formed into moldings having various shapes by a known molding method, for example, an injection molding method, a compression molding method or the like. In some embodiments, the molding method may be injection molding.

In the injection molding, the temperature upon injection of the thermoplastic elastomer composition may be from about 170 to about 260°C. In some embodiments, the temperature upon injection may be from about 190 to about 240°C. It has been observed that with the 190 to 240°C range of temperature upon injection, molded articles have an improved appearance of the molding.

In the injection molding, the mold temperature may be from about 30 to about 75°C. In some embodiments, the mold temperature may be from about 40 to about 65°C. It has been observed that with the narrower 40 to 65°C range of mold temperature, molded articles have an improved appearance and mold releasability.

In the injection molding, the rate of filling the thermoplastic elastomer composition into a mold (before dwell switching) may be from about 10 g/second to about 300 g/second. In some embodiments, the rate of filling may be from about 30 g/second to about 200 g/second. It has been observed that with the narrower range 30 g/second to 200 g/second rate of filling, molded articles have an improved appearance.

In the injection molding, the pressure and time in a dwelling step after injection and filling can be manipulated. These conditions should be such that allow a limited amount of the molten thermoplastic elastomer composition to be filled in a mold during dwelling to improve appearances of the shaped article. In some embodiments, the pressure and time applied are such that the amount of the molten thermoplastic elastomer composition to be filled in a mold during dwelling is about 10% by weight or less per 100% by weight of the molded article. In some embodiments, the pressure and time applied are such that the amount of the molten thermoplastic elastomer composition to be filled in a mold during dwelling is about 7% by weight or less.

The molded article obtained by injection molding of the thermoplastic elastomer composition is suitably used as automobile interior materials. In some embodiments, the molded article is an air bag cover. Examples of the air bag cover include a cover for driver air bag, a cover for passenger air bag, a side air bag cover, a knee air bag cover, and a curtain air bag cover.

### Examples

The following examples and comparative examples are illustrative.

### I. Measurement and Evaluation

### 1. Melt Flow Rate (MFR, unit: g/10 min)

Melt flow rate of a polypropylene resin was measured under the conditions of a temperature of 230°C and a load of 21.18 N in accordance with JIS K7210,

Melt flow rate of a polyethylene resin was measured under the conditions of a temperature of 190°C and a load of 21.18 N in accordance with JIS K7210.

### 2. Contents of Ethylene Units and Propylene Units (units: % by weight)

An amount of monomer units was measured by infrared spectroscopy.

### 3. Melting Temperature (unit: DC)

A differential scanning calorie curve was measured under the following measuring conditions by a heat flux type differential scanning calorimeter (DSC RDC220, manufactured by Seiko Instruments Inc), and a melting temperature was determined from the differential scanning calorie curve in a temperature rising operation.

### Measurement Conditions

Temperature falling operation: After melting at 220°C, temperature falling was carried out within a range from 220 to -90°C at a temperature falling rate of 5°C /min.

Temperature rising operation: Immediately after the temperature falling operation, temperature rising was carried out within a range from -90 to 200°C at a temperature rising rate of 5°C /min.

### 4. Intrinsic viscosity ("ηcxs", "ηcxis", unit: dl/g)

Using an ubbelohde type viscometer, intrinsic viscosity was measured at 135°C using tetralin as a solvent.

### 5. Mooney Viscosity (ML₁₊₄, 125°C)

Mooney viscosity was measured under the conditions of a test temperature of 125°C and a rotor rotating time of 4 min in accordance with ASTM D1646.

### 6. Mooney Stress Relaxation Area (MLRA)

A stress relaxation test was carried out in accordance with ASTM D1646 and an area of a stress relaxation curve at a relaxation time of 1 to 100 seconds was determined in accordance with ASTM D1646.

### 7. Density (unit: kg/m³)

Density was measured in accordance with JIS K7112. A test piece was subjected to an annealing treatment described in JIS K6760: 1995.

### 8. Low-Temperature Impact Strength

Using a 2 mm thick test piece cut out from a plate-shaped injecting molding, an impact test was carried out at a temperature of -35°C in accordance with JIS K71 10. The case where the test piece was broken was indicated as "B" in Table 1, whereas, the case where the test piece was not broken was indicated as "NB" in Table 1.

### 9. Mold Releasability of Injection Molding

Ejection is a movement of parts of a mold controlled by an injection machine, that is, an injection machine pushes ejector-pins of a mold intermittently to remove molded parts from the mold. As an index of demoldability of material, the number of ejections required to remove a certain box-shaped injection molding from the mold was measured. Deformation state of the box-shaped injection molding from the mold was evaluated as follows.
"O": No deformation is observed.
"Δ": Slight deformation is observed.
"x": Large deformation is observed.

### II. Samples

### 1. Polypropylene resin

A: Multistage-polymerized resin by propylene homopolymerization/ propylene-ethylene copolymerization
NMR = 12 g/10 min,
content of component (i) = 75% by weight,
content of component (ii) = 25% by weight,
content of propylene unit in component (i) = 100% by weight, content of ethylene units in component (ii) = 33% by weight and content of propylene units in component (ii)=67% by weight, melting temperature = 167.9°C, [ηcxs] / [ηcxis] = 1.7

### 2. Ethylene-α-olefin elastomers

B-1: (Mooney viscosity (ML1+4, 125°C) = 51, MLRA = 229, content of ethylene units = 76% by weight and content of 1-butene units = 24% by weight)
B-2: (Mooney viscosity (ML1+4, 125°C) = 46, MLRA = 198, content of ethylene units = 70% by weight and content of 1-butene units = 30% by weight)
B-3. (Mooney viscosity (ML1+4, 125°C) = 27, MLRA = 275, content of ethylene units = 77% by weight and content of propylene units = 23% by weight)
B-4: (Mooney viscosity (ML1+4, 125°C) = 20, MLRA = 115, content of ethylene units = 72% by weight and content of 1-butene units = 28% by weight)
B-5: (Mooney viscosity (ML1+4, 125°C) = 35, MLRA = 162, content of ethylene units = 66% by weight and content of 1-octene units = 34% by weight)
B-6: (Mooney viscosity (ML1+4, 125°C) = 30, MLRA = 242, content of ethylene units = 89% by weight and content of 1-butene units = 11% by weight)

### 3. Polyethylene resin

C: (MFR = 1.4 g/10 min, density = 916 kg/m³, ethylene-1-hexene copolymer)

### Example 1 (Reference)

### Thermoplastic Elastomer Composition

100 parts by weight of a polypropylene resin A, 67 parts by weight of an ethyl ene-α-olefin elastomer B-1, 0.067 part by weight: of erucic acid amide (manufactured by Nippon Fine Chemical under the trade name of NEUTRON S) and 0.133 part by weight of an antioxidant (manufactured by Sumitomo Chemical Co., Ltd. under the trade name of Sumilizer GA80) were blended and then melt-kneaded at a temperature of 200°C by a twin-screw extruder (TEX-44HCT manufactured by The Japan Steel Works, LTD.) to obtain a thermoplastic elastomer composition.

### Injection Molding for Evaluation of Physical Properties

The thermoplastic elastomer composition was formed into a plate-shaped injection molding measuring 90 mm in length, 150 mm in width and 2 mm in thickness under the conditions of a cylinder temperature of 220°C and a mold temperature of 50°C by an injection molding machine (manufactured by TOSHIBA MACHINE CO., LTD. under the trade name of EC160NII).

The thermoplastic elastomer composition was formed into a box-shaped injection molding with a tear line portion having a thickness of 0.5 mm under the conditions ofa cylinder temperature of 220°C and a mold temperature of 35°C. The evaluation results of the resulting injection moldings are shown in Table 1.

### Example 2 (Reference)

In the same manner as in Example 1, except that an ethylene-α-olefin elastomer B-2 was used in place of the ethylene-α-olefin elastomer B-1, injection molding was carried out. Evaluation results of the resulting molding are shown in Table 1.

### Example 3 (Reference)

In the same manner as in Example 1, except that an ethylene-α-olefin elastomer B-3 was used in place of the ethylene-α-olefin elastomer B-1, injection molding was carried out. Evaluation results of the resulting molding are shown in Table 1.

### Example 4

In the same manner as in Example 1, except that 50 parts by weight of the ethylene-α-olefin elastomer B-1 was used and 17 parts by weight of a polyethylene resin C was blended, injection molding was carried out. Evaluation results of the resulting molding arc shown in Table 1.

### Comparative Example A

In the same manner as in Example 1, except that an ethylene-α-olefin elastomer B-4 was used in place of the ethylene-α-olefin elastomer B-1, injection molding was carried out. Evaluation results of the resulting molding are shown in Table 1.

### Comparative Example B

In the same manner as in Example 1, except that an ethylene-α-olefin elastomer B-5 was used in place of the ethylene-α-olefin elastomer B-1, injection molding was carried out. Evaluation results of the resulting molding are shown in Table 1.

### Comparative Example C

In the same manner as in Example 1, except that an ethylene-α-olefin elastomer B-6 was used in place of the ethylene-α-olefin elastomer B-1, injection molding was carried out. Evaluation results of the resulting molding are shown in Table 1.

### Comparative Example D

In the same manner as in Example 1, except that 17 parts by weight of the ethylene-α-olefin elastomer B-1 was used and 50 parts by weight of a polyethylene resin C was blended, injection molding was carried out. Evaluation results of the resulting molding are shown in Table 1.

In the evaluations identified in Table 1, "mold releasability" was determined based on the "number of ejections" and "deformation state" observed. The number of ejections refers to the number of times that driving ejection pins were actuated to remove molded parts from the mold.

**TABLE 1**

| Composition of polymer | | Example 1 | Example 2 | Example 3 | Example 4 | Comparative Example A | Comparative Example B | Comparative Example C | Comparative Example D |
|---|---|---|---|---|---|---|---|---|---|
| A | Parts by weight | 100 | 100 | 100 | 100 | 100 | 100 | 100 | 100 |
| B-1 | Parts by weight | 67 | | | 50 | | | | 17 |
| B-2 | Parts by weight | | 67 | | | | | | |
| B-3 | Parts by weight | | | 67 | | | | | |
| B-4 | Parts by weight | | | | | 67 | | | |
| B-5 | Parts by weight | | | | | | 67 | | |
| B-6 | Parts by weight | | | | | | | 67 | |
| C | Parts by weight | | | | 17 | | | | 50 |
| MPR | g/10 min | 4.4 | 5.1 | 3.9 | 5.1 | 7.3 | 6.0 | 4.5 | 6.5 |
| Injected molding | | | | | | | | | |
| Low-temperature impact strength | | NB | NB | NB | NB | NB | NB | B | B |
| Number of ejections | Times | 4 | 4 | 1 | 2 | 6 | 5 | 1 | 1 |
| Deformation state | | ○ | Δ | ○ | ○ | × | × | × | ○ |

| | | | | | | | | | |
|---|---|---|---|---|---|---|---|---|---|
| Examples 1 to 3 represent reference examples. | | | | | | | | | |

## Claims

1. A thermoplastic elastomer composition comprising about 100 parts by weight of component (A), about 20 to about 100 parts by weight of component (B), and about 5 to about 50 parts by weight of component (C) per 100 parts by weight of component (A);
a) wherein component (A) is a polypropylene resin comprising:
about 60 to about 90% by weight of component (i) and
about 40 to about 10% by weight of component (ii);
wherein component (i) comprises of one or more of the following: a propylene homopolymer, a copolymer of propylene and at least one monomer selected from the monomer group consisting of ethylene and an
α-olefin having 4 or more carbon atoms, the copolymer of propylene comprising about 90% by weight or more of propylene units, and a mixture thereof; and
wherein component (ii) comprises an ethylene-α-olefin copolymer consisting of about 20 to about 50% by weight of ethylene units, and about 80 to about 50% by weight α-olefin having 3 or more carbon atoms;
b) wherein component (B) is an ethylene-α-olefin elastomer comprising about 60 to about 85% by weight of ethylene units, and about 40 to about 15% by weight of α-olefin units, and wherein component (B) has a Mooney stress relaxation area of from about 180 to about 300; and
c) wherein component (C) comprises a polyethylene resin having a density of about 915 kg/m³ or more and a melt flow rate of about 0.1 to about 10 g/10 min.

2. The thermoplastic elastomer composition of claim 1 wherein component (A) has a melting temperature measured by a differential scanning calorimeter of about 155°C or higher.

3. The thermoplastic elastomer composition of claim 1, further comprising component (D) which comprises at least one compound selected from the group consisting of fatty acids having 5 or more carbon atoms, metal salts of fatty acids having 5 or more carbon atoms, fatty acid amides having 5 or more carbon atoms, and esters of fatty acids having 5 or more carbon atoms.

4. The thermoplastic elastomer composition of claim 3, wherein component (D) is present from 0.01 to 1.5 parts by weight per 100 parts by weight of the total amount of the components (A), (B) and (C).

5. The thermoplastic elastomer composition of claim 1, wherein the total amount of component (i) and component (ii) is 100% by weight of component (A).

6. The thermoplastic elastomer composition of claim 1, wherein the total content of ethylene units and α-olefin is 100% by weight of component (ii).

7. The thermoplastic elastomer composition of claim 1, wherein the total content of ethylene units and α-olefin units is 100% by weight of component (B).

8. The thermoplastic elastomer composition according to claim 1-7, wherein the component (A) has a ratio of intrinsic viscosity (([ηcxs]/[ηcxis]) 135°C, tetralin) from 1.3 to 8.

9. A molding made of a thermoplastic elastomer composition comprising about 100 parts by weight of component (A), about 20 to about 100 parts by weight of component (B), and about 5 to about 50 parts by weight of component (C) per 100 parts by weight of component (A);
a) wherein component (A) is a polypropylene resin consisting essentially of:
about 60 to about 90% by weight of component (i) and
about 40 to about 10% by weight of component (ii), the total content of components (i) and (ii) is 100% by weight of component (A);
wherein component (i) consists essentially of one or more of the following:
a copolymer of propylene and at least one monomer selected from the monomer group consisting of ethylene and an α-olefin having 4 or more carbon atoms, the copolymer of propylene comprising about 90% by weight or more of propylene units, a propylene homopolymer, and a mixture thereof; and
wherein component (ii) consists essentially of an ethylene-α-olefin copolymer consisting of about 20 to about 50% by weight of ethylene units, and about 80 to about 50% by weight α-olefin having 3 or more carbon atoms, the total content of ethylene units and α-olefin is 100% by weight of component (ii); and
b) wherein component (B) is an ethylene-α-olefin elastomer consisting essentially of about 60 to about 85% by weight of ethylene units, and about 40 to about 15% by weight of α-olefin units, the total content ethylene units and α-olefin units is 100% by weight of component (B), and wherein component (B) has a Mooney stress relaxation area of from about 180 to about 300; and
c) wherein component (C) comprises a polyethylene resin having a density of about 915 kg/m³ or more and a melt flow rate of about 0.1 to about 10 g/10 min.

10. The molding of claim 9 wherein component (A) has a melting temperature measured by a differential scanning calorimeter of about 155°C or higher.

11. The molding of claim 9, further comprising component (D) which comprises at least one compound selected from the group consisting of fatty acids having 5 or more carbon atoms, metal salts of fatty acids having 5 or more carbon atoms, fatty acid amides having 5 or more carbon atoms, and esters of fatty acids having 5 or more carbon atoms.

12. The molding of claim 11, wherein component (D) is present from 0.01 to 1.5 parts by weight per 100 parts by weight of the total amount of the components (A), (B) and (C).

13. The molding according to claim 9-12, wherein the component (A) has a ratio of intrinsic viscosity (([ηcxs)/[ηcxis]) 135°C, tetralin) from 1.3 to 8.

14. The molding according to claim 9-13, wherein the molding is an airbag cover.

## Patentansprüche

1. Eine thermoplastische Elastomerzusammensetzung, umfassend etwa 100 Gewichtsteile einer Komponente (A), etwa 20 bis etwa 100 Gewichtsteile einer Komponente (B) und etwa 5 bis etwa 50 Gewichtsteile einer Komponente (C), bezogen auf 100 Gewichtsteile der Komponente (A);
a) wobei Komponente (A) ein Polypropylenharz ist, das:
etwa 60 bis etwa 90 Gew.-% einer Komponente (i) und
etwa 40 bis etwa 10 Gew.-% einer Komponente (ii) umfasst;
wobei Komponente (i) eines oder mehrere der Folgenden umfasst: ein Propylen-Homopolymer, ein Copolymer aus Propylen und mindestens einem Monomer, ausgewählt aus der Monomergruppe bestehend aus Ethylen und einem α-Olefin mit 4 oder mehr Kohlenstoffatomen, wobei das Copolymer von Propylen etwa 90 Gew.-% oder mehr Propyleneinheiten umfasst, und ein Gemisch davon; und wobei Komponente (ii) ein Ethylen-α-Olefin-Copolymer umfasst, das aus etwa 20 bis etwa 50 Gew.-% Ethyleneinheiten und etwa 80 bis etwa 50 Gew.-% α-Olefin mit 3 oder mehr Kohlenstoffatomen besteht;
b) wobei Komponente (B) ein Ethylen-α-Olefin-Elastomer ist, das etwa 60 bis etwa 85 Gew.-% Ethyleneinheiten und etwa 40 bis etwa 15 Gew.-% α-Olefineinheiten umfasst, und wobei Komponente (B) einen Mooney-Spannungsrelaxationsbereich von etwa 180 bis etwa 300 aufweist; und
c) wobei Komponente (C) ein Polyethylenharz umfasst, das eine Dichte von etwa 915 kg/m³ oder mehr und eine Schmelzflussrate von etwa 0,1 bis etwa 10 g/10 min aufweist.

2. Die thermoplastische Elastomerzusammensetzung nach Anspruch 1, wobei Komponente (A) eine Schmelztemperatur, gemessen mit einem Differentialscanningkalorimeter, von etwa 155 °C oder höher aufweist.

3. Die thermoplastische Elastomerzusammensetzung nach Anspruch 1, ferner umfassend eine Komponente (D), die mindestens eine Verbindung, ausgewählt aus der Gruppe bestehend aus Fettsäuren mit 5 oder mehr Kohlenstoffatomen, Metallsalzen von Fettsäuren mit 5 oder mehr Kohlenstoffatomen, Fettsäureamiden mit 5 oder mehr Kohlenstoffatomen und Fettsäureestern mit 5 oder mehr Kohlenstoffatomen, umfasst.

4. Die thermoplastische Elastomerzusammensetzung nach Anspruch 3, wobei Komponente (D) zu 0,01 bis 1,5 Gewichtsteilen, bezogen auf 100 Gewichtsteile der Gesamtmenge der Komponenten (A), (B) und (C), vorhanden ist.

5. Die thermoplastische Elastomerzusammensetzung nach Anspruch 1, wobei die Gesamtmenge der Komponente (i) und Komponente (ii) 100 Gew.-% der Komponente (A) beträgt.

6. Die thermoplastische Elastomerzusammensetzung nach Anspruch 1, wobei der Gesamtgehalt an Ethyleneinheiten und α-Olefin 100 Gew.-% der Komponente (ii) beträgt.

7. Die thermoplastische Elastomerzusammensetzung nach Anspruch 1, wobei der Gesamtgehalt an Ethyleneinheiten und α-Olefineinheiten 100 Gew.-% der Komponente (B) beträgt.

8. Die thermoplastische Elastomerzusammensetzung nach Anspruch 1-7, wobei die Komponente (A) ein Verhältnis der intrinsischen Viskosität (([ηcxs]/[ηcxis]) 135 °C, Tetralin) von 1,3 bis 8 aufweist.

9. Ein Formteil, hergestellt aus einer thermoplastischen Elastomerzusammensetzung, umfassend etwa 100 Gewichtsteile einer Komponente (A), etwa 20 bis etwa 100 Gewichtsteile einer Komponente (B) und etwa 5 bis etwa 50 Gewichtsteile einer Komponente (C), bezogen auf 100 Gewichtsteile der Komponente (A);
a) wobei Komponente (A) ein Polypropylenharz ist, das im Wesentlichen aus:
etwa 60 bis etwa 90 Gew.-% einer Komponente (i) und
etwa 40 bis etwa 10 Gew.-% einer Komponente (ii) besteht, wobei der Gesamtgehalt der Komponenten (i) und (ii) 100 Gew.-% der Komponente (A) beträgt;
wobei Komponente (i) im Wesentlichen aus einem oder mehreren der Folgenden besteht:
einem Copolymer aus Propylen und mindestens einem Monomer, ausgewählt aus der Monomergruppe bestehend aus Ethylen und einem α-Olefin mit 4 oder mehr Kohlenstoffatomen, wobei das Copolymer aus Propylen etwa 90 Gew.-% oder
mehr Propyleneinheiten umfasst, einem Propylen-Homopolymer und einem Gemisch davon; und
wobei Komponente (ii) im Wesentlichen aus einem Ethylen-α-Olefin-Copolymer besteht, das aus etwa 20 bis etwa 50 Gew.-% Ethyleneinheiten und etwa 80 bis etwa 50 Gew.-% α-Olefin mit 3 oder mehr Kohlenstoffatomen besteht, wobei der Gesamtgehalt an Ethyleneinheiten und α-Olefin 100 Gew.-% der Komponente (ii) beträgt; und
b) wobei Komponente (B) ein Ethylen-α-Olefin-Elastomer ist, das im Wesentlichen aus etwa 60 bis etwa 85 Gew.-% Ethyleneinheiten und etwa 40 bis etwa 15 Gew.-% α-Olefineinheiten besteht, wobei der Gesamtgehalt an Ethyleneinheiten und α-Olefineinheiten 100 Gew.-% der Komponente (B) beträgt und wobei Komponente (B) einen Mooney-Spannungsrelaxationsbereich von etwa 180 bis etwa 300 aufweist; und
c) wobei Komponente (C) ein Polyethylenharz umfasst, das eine Dichte von etwa 915 kg/m³ oder mehr und eine Schmelzflussrate von etwa 0,1 bis etwa 10 g/10 min aufweist.

10. Das Formteil nach Anspruch 9, wobei Komponente (A) eine Schmelztemperatur, gemessen mit einem Differentialscanningkalorimeter, von etwa 155 °C oder höher aufweist.

11. Das Formteil nach Anspruch 9, ferner umfassend eine Komponente (D), die mindestens eine Verbindung, ausgewählt aus der Gruppe bestehend aus Fettsäuren mit 5 oder mehr Kohlenstoffatomen, Metallsalzen von Fettsäuren mit 5 oder mehr Kohlenstoffatomen, Fettsäureamiden mit 5 oder mehr Kohlenstoffatomen und Fettsäureestern mit 5 oder mehr Kohlenstoffatomen, umfasst.

12. Das Formteil nach Anspruch 11, wobei Komponente (D) zu 0,01 bis 1,5 Gewichtsteilen, bezogen auf 100 Gewichtsteile der Gesamtmenge der Komponenten (A), (B) und (C), vorhanden ist.

13. Das Formteil nach Anspruch 9-12, wobei die Komponente (A) ein Verhältnis der intrinsischen Viskosität (([ηcxs]/[ηcxis]) 135 °C, Tetralin) von 1,3 bis 8 aufweist.

14. Das Formteil nach Anspruch 9-13, wobei das Formteil eine Airbag-Abdeckung ist.

## Revendications

1. Composition élastomère thermoplastique comprenant environ 100 parties en poids de composant (A), environ 20 à environ 100 parties en poids de composant (B) et environ 5 à environ 50 parties en poids de composant (C) pour 100 parties en poids de composant (A) ;
a) dans laquelle le composant (A) est une résine de polypropylène comprenant :
environ 60 à environ 90 % en poids de composant (i) et
environ 40 à environ 10 % en poids de composant (ii) ;
dans laquelle le composant (i) comprend un ou plusieurs des composés suivants : un homopolymère de propylène, un copolymère de propylène et au moins un monomère choisi dans le groupe de monomères constitué par l'éthylène et une α-oléfine ayant 4 atomes de carbone ou plus, le copolymère de propylène comprenant environ 90 % en poids ou plus d'unités propylène, et un mélange de ceux-ci ; et
dans lequel le composant (ii) comprend un copolymère d'éthylène-α-oléfine consistant en environ 20 à environ 50 % en poids d'unités éthylène et environ 80 à environ 50 % en poids d'une α-oléfine ayant 3 atomes de carbone ou plus ;
b) dans laquelle le composant (B) est un élastomère d'éthylène-α-oléfine comprenant environ 60 à environ 85 % en poids d'unités éthylène et environ 40 à environ 15 % en poids d'unités α-oléfiniques, et dans laquelle le composant (B) a une zone de relaxation de contrainte Mooney d'environ 180 à environ 300 ; et
c) dans laquelle le composant (C) comprend une résine de polyéthylène ayant une densité d'environ 915 kg/m³ ou plus et un indice de fluidité à l'état fondu d'environ 0,1 à environ 10 g/10 minutes.

2. Composition élastomère thermoplastique selon la revendication 1, dans laquelle le composant (A) a une température de fusion mesurée par un calorimètre à balayage différentiel d'environ 155 °C ou plus.

3. Composition élastomère thermoplastique selon la revendication 1, comprenant en outre un composant (D) qui comprend au moins un composé choisi dans le groupe constitué par les acides gras ayant 5 atomes de carbone ou plus, les sels métalliques d'acides gras ayant 5 atomes de carbone ou plus, les amides d'acides gras ayant 5 atomes de carbone ou plus et les esters d'acides gras ayant 5 atomes de carbone ou plus.

4. Composition élastomère thermoplastique selon la revendication 3, dans laquelle le composant (D) est présent de 0,01 à 1,5 partie en poids pour 100 parties en poids de la quantité totale des composants (A), (B) et (C).

5. Composition élastomère thermoplastique selon la revendication 1, dans laquelle la quantité totale de composant (i) et de composant (ii) est de 100 % en poids du composant (A).

6. Composition élastomère thermoplastique selon la revendication 1, dans laquelle la teneur totale en unités éthylène et α-oléfine est de 100 % en poids de composant (ii).

7. Composition élastomère thermoplastique selon la revendication 1, dans laquelle la teneur totale en unités éthylène et α-oléfine est de 100 % en poids de composant (B).

8. Composition élastomère thermoplastique selon l'une quelconque des revendications 1 à 7, dans laquelle le composant (A) a un rapport de viscosité intrinsèque (([ηcxs]/[ηcxis]) 135 °C, tétraline) de 1,3 à 8.

9. Moulage préparé à partir d'une composition élastomère thermoplastique comprenant environ 100 parties en poids de composant (A), environ 20 à environ 100 parties en poids de composant (B) et environ 5 à environ 50 parties en poids de composant (C) pour 100 parties en poids de composant (A) ;
a) dans laquelle le composant (A) est une résine de polypropylène consistant essentiellement en :
environ 60 à environ 90 % en poids de composant (i) et
environ 40 à environ 10 % en poids de composant (ii), la teneur totale des composants (i) et (ii) est de 100 % en poids du composant (A) ;
dans laquelle le composant (i) consiste essentiellement en un ou plusieurs des composés suivants : un copolymère de propylène et au moins un monomère choisi dans le groupe de monomères constitué par l'éthylène et une α-oléfine ayant 4 atomes de carbone ou plus, le copolymère de propylène comprenant environ 90 % en poids ou plus d'unités propylène, un homopolymère de propylène et un mélange de ceux-ci ; et
dans lequel le composant (ii) consiste essentiellement en un copolymère d'éthylène-α-oléfine consistant en environ 20 à environ 50 % en poids d'unités éthylène et environ 80 à environ 50 % en poids d'une α-oléfine ayant 3 atomes de carbone ou plus, la teneur totale en unités éthylène et en unités α-oléfiniques est de 100 % en poids du composant (ii) ; et
b) dans lequel le composant (B) est un élastomère d'éthylène-α-oléfine consistant essentiellement d'environ 60 à environ 85 % en poids d'unités éthylène et d'environ 40 à environ 15 % en poids d'unités α-oléfiniques, la teneur totale en unités éthylène et en unités α-oléfiniques est de 100 % en poids du composant (B), et dans lequel le composant (B) a une zone de relaxation de contrainte Mooney d'environ 180 à environ 300 ; et
c) dans lequel le composant (C) comprend une résine de polyéthylène ayant une densité d'environ 915 kg/m³ ou plus et un indice de fluidité à l'état fondu d'environ 0,1 à environ 10 g/10 minutes.

10. Moulage selon la revendication 9, dans lequel le composant (A) a une température de fusion mesurée par un calorimètre à balayage différentiel d'environ 155 °C ou plus.

11. Moulage selon la revendication 9, comprenant en outre un composant (D) qui comprend au moins un composé choisi dans le groupe constitué par les acides gras ayant 5 atomes de carbone ou plus, les sels métalliques d'acides gras ayant 5 atomes de carbone ou plus, les amides d'acides gras ayant 5 atomes de carbone ou plus et les esters d'acides gras ayant 5 atomes de carbone ou plus.

12. Moulage selon la revendication 11, dans lequel le composant (D) est présent de 0,01 à 1,5 partie en poids pour 100 parties en poids de la quantité totale des composants (A), (B) et (C).

13. Moulage selon l'une quelconque des revendications 9 à 12, dans lequel le composant (A) a un rapport de viscosité intrinsèque (([ηcxs]/[ηcxis]) 135 °C, tétraline) de 1,3 à 8.

14. Moulage selon l'une quelconque des revendications 9 à 13, dans lequel le moulage est un revêtement d'airbag.
